# EUROPÄISCHE PATENTANMELDUNG

(11) **EP 4 591 966 A1**
(43) Veröffentlichungstag der Anmeldung: **30.07.2025**
(21) Anmeldenummer: 25153890.6
(22) Anmeldetag: 24.01.2025
(51) Int. Cl.: B01D 46/00, B01D 46/24, B01D 46/44

(54) **ANZEIGEVORRICHTUNG ZUR ANZEIGE VON LECKAGEN IN EINER FILTERVORRICHTUNG SOWIE FILTERVORRICHTUNG HIERFÜR**

(30) Priorität: 25.01.2024 AT 500532024
(71) Anmelder: Kappa Filter Systems GmbH, 4407 Steyr-Gleink (AT)
(72) Erfinder: KRÜGER, Klaus, 4400 Steyr (AT)
(74) Vertreter: Burger, Hannes Alfred

(57) **Zusammenfassung**

Die Erfindung betrifft eine Anzeigevorrichtung (1) zur Anzeige von Leckagen (11) in einer Filtervorrichtung (2), eine Filtervorrichtung (2), sowie ein Filtersystem. Die Anzeigevorrichtung (1) umfasst ein Verbindungselement (3) und ein mit dem Verbindungselement (3) gekoppeltes Anzeigeelement (4) . Das Anzeigeelement (4) ist mittels des Verbindungselements (3) an einer Luftaustrittsöffnung (5) eines Stützkörpers (6) der Filtervorrichtung (2) anordenbar oder angeordnet. Zudem weist das Anzeigeelement (4) eine Oberfläche (7) auf, welche derart ausgebildet ist, dass sich Partikel (8), insbesondere Staub, auf dieser ablagern können.

## Beschreibung

Die Erfindung betrifft eine Anzeigevorrichtung zur Anzeige von Leckagen in einer Filtervorrichtung, eine Filtervorrichtung, sowie ein Filtersystem.

Filtervorrichtungen, sowie Filtersysteme umfassend eine Vielzahl an zumeist batterieartig nebeneinander angeordneten Filtervorrichtungen dienen der Reinigung von verunreinigten Luftströmen, beispielsweise zur Reinigung von staubhaltiger Abluft industrieller Anlagen. Die zu reinigenden Luftströme sind hierbei mit Partikeln, insbesondere mit Staub beladen. Je nach Art der Anwendung kann es sich bei den Partikeln beispielsweise um Ruß, Metallpartikel, oder auch chemische Verbindungen, oder Mischungen verschiedener Partikeltypen handeln.

Im Wesentlichen umfassen die im Stand der Technik bekannten Filtervorrichtungen ein Filterelement und einen Stützkörper, wobei der Stützkörper innerhalb des Filterelements angeordnet ist und diesen formgebend stabilisiert. Filterelemente werden häufig auch als Schlauchfilter bezeichnet. Ein Filterelement umfasst oder besteht als Filtermedium aus einen netz- bzw. gewebeartigen Filterstrumpf, der sackartig ausgebildet ist und so den innerhalb des Filterstrumpfes angeordneten Stützkörper oder Stützkorb relativ enganliegend umkleidet.

Ein Stützkörper oder Stützkorb besteht üblicherweise aus einer Mehrzahl von stabartigen Profilen, welche netz- bzw. korbartig miteinander verbunden bzw. verschweißt sind. Insbesondere umfasst ein solcher Stützkörper eine Mehrzahl von in Kreisform aneinander gereihten, zueinander beabstandeten Profilstreben, welche über zumindest einen kreisrunden Haltering in Position gehalten werden. Dieser somit hohlzylindrische Stützkörper wird vom sackartigen Filterelement bzw. Filterstrumpf umhüllt.

Im Betriebszustand strömt der mit Partikeln beladene bzw. verschmutzte Luftstrom über die äußere Oberfläche bzw. die Außenseite des Filterelements in den Stützkörper ein. Dabei scheiden sich die Partikel an der Außenseite des Filterelements ab und es dringt nur der von Partikeln zumindest weitgehend befreite Luftstrom in das Innere des Filterelements, respektive in das Innere des Stützkörpers ein. In weitere Folge strömt der gereinigte Luftstrom über eine Luftaustrittsöffnung am oberen Ende des Filterelements bzw. am oberen Ende des Stützkörpers aus.

Gattungsgemäße Filtervorrichtungen und Filtersysteme sind beispielsweise durch die AT 506 312 B1 bekannt geworden.

Besonders bei längeren Standzeiten der Filterelemente kann es verschleißbedingt zu Leckagen, Löchern, Rissen oder Beschädigungen am Filtermaterial kommen. Im Falle von Leckagen, Löchern, Rissen oder Beschädigungen am Filterelement bzw. am Filterstrumpf kommt es vor, dass Partikel ungewollt in das Innere des Filterelements, respektive in das Innere des Stützkörpers eindringen und gelangen von dort in weiterer Folge über die Luftaustrittsöffnung wieder nach außen. Dadurch wird das Reinigungsergebnis unter Umständen sogar erheblich beeinträchtigt.

Zur Visualisierung, Anzeige oder Erkennung solcher Defekte bzw. Leckagen wird im Stand der Technik unter anderem mit fluoreszierendem Staub gearbeitet.

Alternativ werden im Stand der Technik die Innenböden der Stützkörper mit einer reflektierenden, beispielsweise einer verzinkten, Oberfläche ausgebildet. Auf dieser Oberfläche sammelt sich im Falle von Leckagen Staub an. Leuchtet ein Inspekteur mit einer Taschenlampe von oben über die Luftaustrittsöffnung in das Innere zum Boden, so kann er eine sich dort angereicherte Staubansammlung erkennen. Diese Methode ist jedoch überaus ineffizient und zeitaufwendig, weshalb Leckagen oftmals lange unerkannt bleiben. Dadurch wird das Luftreinigungsergebnis und die Anlageneffizienz eines Filtersystems bzw. eines Luftreinigungssystems erheblich verschlechtert.

Weiters sind sogenannte Filterbruchwächter als triboelektrische Partikeldetektoren bzw. Sensoren als Stand der Technik bekannt.

Eine weitere im Stand der Technik bekannte Methode zur Visualisierung, Anzeige oder Erkennung solcher Defekte bzw. Leckagen, ist die Verwendung des Filterelements bzw. des Filterstrumpfes selbst als Indikator. Dies hat jedoch den Nachteil, dass nur solche Partikelablagerungen erkannt werden, welche sich farblich von der Farbe des Filterelements unterscheiden.

Aufgabe der vorliegenden Erfindung war es, diese Nachteile zu überwinden und eine effiziente, zuverlässige und einfach ablesbare Anzeige von Leckagen in Filtervorrichtungen zur Verfügung zu stellen, sodass eine dauerhaft hohe Reinigungsleistung und Anlageneffizienz ermöglicht wird.

Diese Aufgabe wird durch eine Anzeigevorrichtung, insbesondere durch eine optische bzw. visuelle Anzeigevorrichtung, zur Anzeige von Leckagen in einer Filtervorrichtung, dadurch gelöst, dass sie ein Anzeigeelement umfasst, wobei das Anzeigeelement an einer Luftaustrittsöffnung eines Stützkörpers der Filtervorrichtung anordenbar oder angeordnet ist, und wobei das Anzeigeelement eine Oberfläche aufweist, welche derart ausgebildet ist, dass sich Partikel, insbesondere Staub, auf dieser ablagern kann, sodass sich die Oberfläche, insbesondere deren optischer Eindruck bzw. deren optische bzw. visuelle Erscheinung, infolge einer Ablagerung von Partikeln verändert.

Die erfindungsgemäße Ausbildung einer Anzeigevorrichtung, respektive eines Leckageindikators hat den Vorteil, dass ein Benutzer bei Betrachtung der Oberfläche des Anzeigeelements sofort sieht, ob an dieser Partikel abgelagert sind, oder ob diese sauber ist. Daraus kann ein Benutzer im Zuge von Inspektions- und Wartungsarbeiten sofort und ohne Zuhilfenahme von Hilfsmitteln erkennen, ob das Filterelement beschädigt ist und somit ausgetauscht werden muss. Da die Gasaustrittsöffnung von Filtervorrichtungen üblicherweise gut einsehbar ist, kann eine solche optische Prüfung des Anzeigeelements schnell und einfach, insbesondere ohne Vorbereitungsarbeiten, ohne Hilfsmittel und ohne aufwendige Einschulungen durchgeführt werden.

Vorteilhafterweise ist die Anzeigevorrichtung am Stützkörper angeordnet oder anordenbar, und insbesondere nicht am Filterelement. Dies daher, weil der Stützkörper üblicherweise deutlich längere Standzeiten bzw. eine deutlich längere Lebensdauer aufweist als das Filterelement, welches schließlich im Fall von Leckagen und Verschleiß ausgetauscht werden muss.

Idealerweise überragt das Anzeigeelement das obere Ende der Filtervorrichtung, insbesondere die Luftaustrittsöffnung des Stützkörpers der Filtervorrichtung in axialer Richtung einer Stützkörpermittelsachse, sodass es für einen Inspekteur gut einsehbar ist.

Das Anzeigeelement kann sowohl ein einzelnes einstückiges oder einzelnes einteiliges Bauteil sein, aber auch ein aus zwei oder mehr voneinander unabhängig an der Luftaustrittsöffnung des Stützkörpers der Filtervorrichtung anordenbaren oder angeordneten Anzeigeelementen gebildet sein. Der Begriff Anzeigeelement kann somit auch eine Anordnung aus mehreren gleich- oder verschiedenartigen Anzeigeelementen bezeichnen.

Gemäß einer vorteilhaften Weiterbildung kann es sein, dass die Anzeigevorrichtung ein Verbindungselement umfasst, wobei das Anzeigeelement mit dem Verbindungselement gekoppelt ist, und wobei das Anzeigeelement mittels des Verbindungselements an der Luftaustrittsöffnung des Stützkörpers der Filtervorrichtung anordenbar oder angeordnet ist.

Damit kann ermöglicht werden, dass das Anzeigeelement das obere Ende der Filtervorrichtung in gewünschter Höhe überragt, sodass es für einen Inspekteur gut einsehbar ist. Hierzu kann das Verbindungselement beispielsweise stabförmig ausgebildet sein und das obere Ende des Stützkörpers, respektive die Luftaustrittsöffnung in axialer Richtung einer Stützkörpermittelsachse überragen. Das Verbindungselement kann zudem insbesondere mittig über der Luftaustrittsöffnung angeordnet sein. Es kann auch sein, dass das Anzeigeelement das obere Ende der Filtervorrichtung, insbesondere die Luftaustrittsöffnung des Stützkörpers der Filtervorrichtung in axialer Richtung einer Stützkörpermittelsachse, auch ohne das Verbindungselement überragt.

Gemäß einer vorteilhaften Weiterbildung kann vorgesehen sein, dass das Anzeigeelement mit dem Verbindungselement lösbar gekoppelt ist, oder dass das Verbindungselement mit der Luftaustrittsöffnung des Stützkörpers lösbar gekoppelt ist.

Eine wechselbare bzw. austauschbare Anzeigevorrichtung bzw. ein wechselbares bzw. austauschbares Anzeigeelement hat den Vorteil, dass damit ein verunreinigtes Anzeigeelement zur Reinigung oder zum Austausch entfernt werden kann. Dies kann die Dauer von Wartungsarbeiten verkürzen, sodass die Anlagenverfügbarkeit im Falle von Inspektionen und Wartungsarbeiten nur wenig beeinträchtigt wird. Das Verbindungselement kann mit dem Stützkörper mittels einer lösbaren Halterung verbunden sein. Alternativ oder zusätzlich kann das Anzeigeelement mit dem Verbindungselement mittels einer lösbaren Halterung verbunden sein. Ein Lösen dieser Verbindung kann bevorzugt werkzeuglos erfolgen, beispielsweise mittels eines Sicherungsringes, eines Splints oder dergleichen. Es kann auch sein, dass das Anzeigeelement über ein Gewinde auf das Verbindungselement aufgeschraubt ist.

Als vorteilhaft hat es sich auch erwiesen, wenn das Anzeigeelement insbesondere mittels des Verbindungselements, insbesondere mittig bzw. zentral, an einem oberen Laufring des Stützkörpers angeordnet ist.

Damit kann gewährleistet werden, dass das Anzeigeelement den Stützkörper an seinem oberen Ende, bzw. an seiner Luftaustrittsöffnung in axialer Richtung einer Stützkörpermittelsachse überragt und dadurch für einen Benutzer auch aus weiterer Distanz gut erkennbar ist.

Darüber hinaus kann es sein, dass die Oberfläche des Anzeigeelements glatt und/oder lichtreflektierend ausgebildet ist, sodass eine Ablagerung von Partikeln auf der Oberfläche eine Änderung der Reflexion oder Rauigkeit visuell erkennbar macht, und/oder dass die Oberfläche des Anzeigeelements elektrostatisch geladen ist, und/oder dass die Oberfläche des Anzeigeelements mit einem Kleber ausgebildet ist und/oder dass die Oberfläche des Anzeigeelements mit einem Gewebe oder einem Gewirk, beispielsweise einem textilen Material, Stoff, Filz, oder dergleichen, ausgebildet ist.

Mit dem Begriff glatt im Kontext der Erfindung ist eine Rauheit gemeint, welche ähnlich oder vergleichbar mit der Rauheit einer Glasoberfläche beispielsweise eines transparenten Fensters oder eines Spiegels ist. Ein Spiegel ist eine reflektierende Fläche, welche glatt genug ist, dass reflektiertes Licht nach dem Reflexionsgesetz seine Parallelität behält und somit ein Abbild entstehen kann. Die Rauheit der Spiegelfläche muss dafür kleiner sein als etwa die halbe Wellenlänge des Lichts. Die Rauheit ist ein Begriff aus der Oberflächenphysik, der die Unebenheit der Oberflächenhöhe bezeichnet. Zur quantitativen Charakterisierung der Rauheit gibt es unterschiedliche Berechnungsverfahren, die jeweils auf verschiedene Eigenheiten der Oberfläche Rücksicht nehmen.

Die jeweilige Oberfläche kann dabei auf den jeweiligen Anwendungsfall, bzw. auf Art und Beschaffenheit der Partikel abgestimmt sein. Auf glatten Oberflächen können sich Partikel besonders gut ablagern. Insbesondere wenn glatte Oberflächen reflektierend oder transparent oder durchscheinend sind, können etwaige Partikelablagerungen besonders gut erkannt werden, weil sie sich von der sauberen Oberfläche gut abheben. Insbesondere elektrostatisch aufgeladenen Oberflächen können die Ablagerung von Partikeln begünstigen.

Es kann zudem auch vorteilhaft sein, wenn die Oberfläche klebend, beispielsweise mit einem Klebefilm, einem Klebeband oder einem Klebeetikett, ausgebildet ist. Die klebende Oberfläche kann dabei eine spiegelnde bzw. reflektierende Oberfläche aufweisen, sodass Partikelansammlungen darauf besonders gut erkennbar sind.

Denkbar wäre auch eine Gewebehülle, welche das Anzeigeelement umhüllt und auf welcher sich Partikel ablagern.

Denkbar ist auch, dass die Oberfläche des Anzeigeelements kugelförmig, halbkugelförmig oder plattenförmig, als auch hohlzylindrisch oder hohl, bogenförmig, trichterförmig oder ringförmig ausgebildet ist. Dabei kann das Anzeigeelement auch als Sammelbehältnis für die abgelagerten Partikel dienen und so leichter gereinigt werden.

Damit können sich Partikel an mehreren Seiten des Anzeigeelements ablagern und ein Benutzer kann unbenommen vom Betrachtungswinkel erkennen, ob sich Partikel auf dem Anzeigeelement abgelagert haben und damit eine Leckage im Filterelement vorliegt.

Hohlzylindrische, ringförmige oder auch trichterförmige Anzeigeelemente können dabei einen Durchmesser aufweisen, welcher im Wesentlichen dem Innendurchmesser des Stützkörpers entspricht, sodass das Anzeigeelement in diesen Stützkörper am oberen Ende bzw. im Bereich der Luftaustrittsöffnung einsetzbar sein kann. Die Oberfläche zur Ablagerung der Partikel derart geformter und angeordneter Anzeigeelement liegt hierbei an der Innenfläche der jeweiligen Ausführung. Ein solches hohlzylindrisches, ringförmiges oder auch trichterförmiges Anzeigeelement kann vorteilhafterweise auch bei seitlicher Betrachtung für eine Inspektion gut einsehbar sein.

Es kann sein, dass das Anzeigeelement derart ausgebildet ist, dass ein vergleichsweise alter Stützkörper mit diesem nachgerüstet werden kann. Dies, indem das Anzeigeelement in den bzw. auf den oberen Laufring ein- oder aufgesteckt, oder in oder auf diesen geklippt oder anderweitig befestigt werden kann. Dies, insbesondere wenn, aber nicht darauf beschränkt, das Anzeigeelement hohlzylindrisch, ringförmig oder auch trichterförmig ist. Jedoch können auch anders geformte Anzeigeelement nachgerüstet werden. Dies insbesondere dann, wenn diese lösbar an dem Stützkörper befestigbar oder befestigt sind.

Denkbar ist auch ein Anzeigeelement in Form eines Ringes, insbesondere eines Schnappringes beispielsweise aus oder umfassend Federstahl. Ein solcher Ring kann selbst als Anzeigeelement dienen. Alternativ kann auch ein Verbindungselement in Form eines Ringes, insbesondere eines Schnappringes beispielsweise aus oder umfassend Federstahl, ausgebildet sein und kann hierbei dann als Halterung für das Anzeigeelement dienen. Dazu kann das Anzeigeelement ein textiles Material oder ein Gewebe, beispielsweise einen Stoff, umfassen, wobei das textile Material mittels des als Ring oder Schnappring ausgebildeten Verbindungselementes um den Stützkorbkopf bzw. um das obere Ende bzw. um die Luftaustrittsöffnung gestülpt werden kann.

Durch die Auswahl des textilen Materials des Anzeigeelementes bzw. der Oberfläche des Anzeigeelementes kann neben der Anzeige von abgelagerten Partikeln auch eine, insbesondere kurzzeitige, Übertemperatur angezeigt bzw. nachgewiesen werden. Weiters wäre durch die Auswahl des textilen Materials oder durch eine Behandlung des textilen Materials auch eine chemische und/oder physikalische Reaktion denkbar, welche wiederum Aufschluss über Inhaltsstoffe in der Fortluft geben kann.

Gemäß einer Variante ist es auch denkbar, dass die Oberfläche des Anzeigeelements Glas oder Metall umfasst. Denkbar wären auch Oberflächen umfassend textile Materialien, Gewebe, Gewirke oder Stoffe.

Diese Materialien eigenen sich besonders gut zur Visualisierung von auf der Oberfläche abgelagerten Partikeln und können zudem einfach, schnell und gründlich wieder gereinigt und in weiterer Folge wieder einsatzbereit gemacht werden.

Vorteilhafterweise kann es auch sein, dass die Oberfläche des Anzeigeelements reinigbar ist, insbesondere abwischbar, abwaschbar, oder waschbar ist, und/oder dass die Anzeigevorrichtung, das Anzeigeelement oder die Oberfläche des Anzeigeelements entfernbar und austauschbar sind.

Damit können Inspektions- und Wartungsarbeiten besonders schnell durchgeführt werden. Verunreinigte Anzeigeelemente können entfernt und durch saubere bzw. neue ausgetauscht werden. Nach einer Reinigung können die gebrauchten Anzeigeelemente wieder verwendet werden. Dies führt zu einer Verkürzung von Anlagenstillständen in Folge von Inspektions- und Wartungsarbeiten und zu einer Kostenreduktion durch die Wiederverwendung der Anzeigeelemente.

Überdies ist es auch denkbar, dass das Anzeigeelement mit einem Datenträger, einem Sensor, und/oder mit einem maschinenlesbaren Element, insbesondere mit einem Chip, beispielsweise einem RFID-Chip und/oder mit einer Antenne, ausgebildet ist.

Mittels Datenträgern und/oder Sensoren können mittels des Anzeigeelements neben einer Indikation von Leckagen an dessen Oberfläche je nach Art des Sensors zusätzlich auch noch Informationen zum ausströmenden Luftstrom erfasst und gespeichert werden. Diese Daten können entweder direkt am Anzeigeelement gespeichert und bedarfsweise ausgelesen werden oder insbesondere drahtlos an eine entsprechende Recheneinheit übermittelt werden. Beispielsweise können Sensoren zur Messung des austretenden Volumenstromes, der Luftgeschwindigkeit, Feuchtegehalt, usw. eingesetzt werden.

Maschinenlesbare Elemente können dabei helfen, das aktuell eingesetzte Filterelement eindeutig zu identifizieren. So können beispielsweise Informationen über die aktuelle Standzeit des Filterelements erfasst werden. Aufgrund der guten Zugänglichkeit des Anzeigeelements an der Luftaustrittsseite ist ein Auslesen der maschinenlesbaren Elemente wenig aufwendig.

Die Aufgabe der Erfindung wird unabhängig davon auch durch eine Filtervorrichtung zur Reinigung eines mit Partikeln beladenen Luftstroms, umfassend ein insbesondere sackartiges, formflexibles und luftdurchlässiges Filterelement und einen Stützkörper, dadurch gelöst, dass die Filtervorrichtung eine Anzeigevorrichtung nach einem der Ansprüche oder gemäß der Beschreibung umfasst.

Um unnötige Wiederholungen zu vermeiden, wird hier auf die voranstehenden Beschreibungsteile verwiesen.

Die Aufgabe der Erfindung wird unabhängig davon auch durch ein Filtersystem umfassend eine Vielzahl an Filtervorrichtungen dadurch gelöst, dass das zumindest eine der Filtervorrichtungen nach einem der Ansprüche oder gemäß der Beschreibung ausgebildet ist.

Um unnötige Wiederholungen zu vermeiden, wird hier auf die voranstehenden Beschreibungsteile verwiesen. Insbesondere kann es ausreichend sein, wenn nicht alle Filtervorrichtungen mit einer Anzeigevorrichtung bzw. mit einem Leckageindikator ausgebildet sind. Beispielsweise können die Filtervorrichtungen innerhalb des Filtersystems in Gruppen gruppiert sein, und dabei einer oder mehrere der Filtervorrichtungen je Gruppe eine Anzeigevorrichtung aufweisen. Dies insbesondere dann, wenn die Filterelemente der Filtervorrichtungen innerhalb einer Gruppe dieselbe Ist-Standzeit aufweisen, also alle Filterelemente quasi gleich alt sind.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel einer Filtervorrichtung mit einer Anzeigevorrichtung in dreidimensionaler Ansicht;
- Fig. 2: die Filtervorrichtung aus Fig. 1 in Seitenansicht;
- Fig. 3: eine Detailansicht der Filtervorrichtung aus Fig. 1;
- Fig. 4: ein weiteres Ausführungsbeispiel einer Filtervorrichtung mit einer Anzeigevorrichtung in dreidimensionaler Ansicht;
- Fig. 5: ein weiteres Ausführungsbeispiel einer Filtervorrichtung mit einer Anzeigevorrichtung in dreidimensionaler Ansicht;
- Fig. 6: ein weiteres Ausführungsbeispiel einer Filtervorrichtung mit einer Anzeigevorrichtung in dreidimensionaler Ansicht;
- Fig. 7: ein weiteres Ausführungsbeispiel einer Filtervorrichtung mit einer Anzeigevorrichtung in dreidimensionaler Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

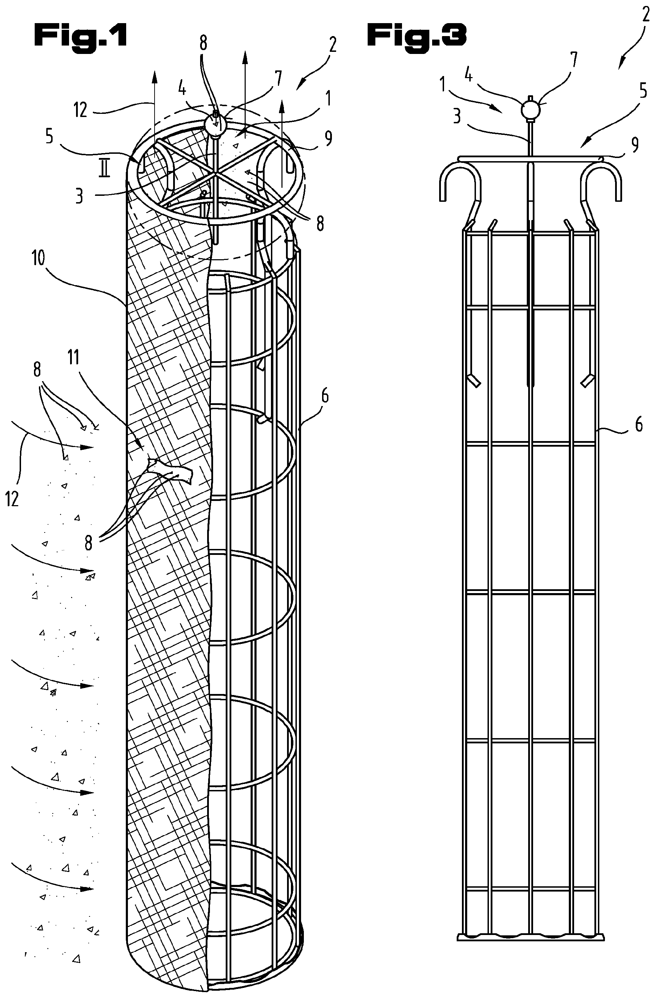

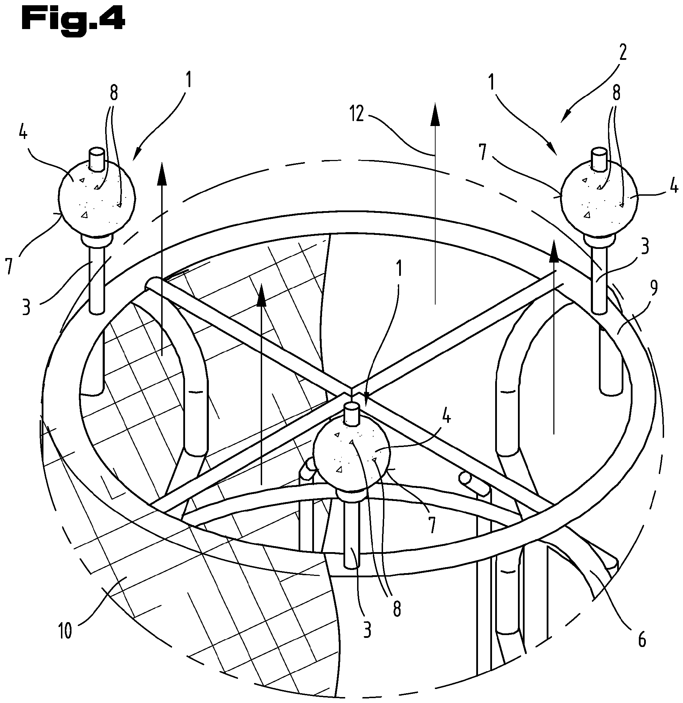

Die Figuren 1 bis 3 zeigen in ihrer Zusammenschau ein Ausführungsbeispiel einer Filtervorrichtung 2 mit einer Anzeigevorrichtung 1 zur Anzeige von Leckagen 11. Die Figuren 4 bis 7 zeigen jeweils weitere Ausführungsbeispiele. In der nachfolgenden Beschreibung werden sämtliche Figuren bzw. Ausführungsbeispiele, um unnötige Wiederholungen zu vermeiden, in einer Zusammenschau beschrieben, wobei bei Besonderheiten auf die jeweilige Darstellung verweisen wird. Die Filtervorrichtung 2 ist dabei zur Reinigung eines mit Partikeln 8 beladenen Luftstroms 12 ausgebildet und umfasst ein insbesondere sackartiges, formflexibles und luftdurchlässiges Filterelement 10 und einen Stützkörper 6.

Der Stützkörper 6 kann dabei innerhalb des Filterelements 10 angeordnet sein und diesen formgebend stabilisieren. Ein Filterelement 10 kann ein netz- bzw. gewebeartigen Filterstrumpf sein bzw. einen solchen umfassen, wobei der Filterstrumpf sackartig oder sackförmig ausgebildet ist. So kann der Filterstrumpf den Stützkörper 6 oder Stützkorb relativ enganliegend umkleiden.

Ein Stützkörper 6 oder Stützkorb kann aus einer Mehrzahl von stabartigen Profilen, welche netz- bzw. korbartig miteinander verbunden bzw. verschweißt sind. Insbesondere kann ein Stützkörper 6 eine Mehrzahl von in Kreisform aneinander gereihten, zueinander beabstandeten Profilstreben umfassen, welche über zumindest einen kreisrunden Haltering in Position gehalten werden. Ein solcher somit hohlzylindrische Stützkörper 6 kann vom sackartigen Filterelement 10 bzw. Filterstrumpf umhüllt werden.

In der Fig. 1 und im Detail in der Fig. 3, sowie in den Fig. 4 bis 7 ist eine Filtervorrichtung 2 dargestellt, wobei der hohlzylindrische, gerüstartige Stützkörper 6 mit dem Filterelement 10 umhüllt sein kann. Es versteht sich von selbst, dass die Darstellungen von Stützkörper 6 und Filterelement 10 lediglich beispielhaft und stellvertretend für eine Vielzahl denkbarer Ausführungen und Formen zu verstehen sind. Insbesondere sind dem Fachmann verschiedene Arten und Konturen von Stützkörpern 6 bekannt. Auch für Art, Material und Beschaffenheit der Filterelement 10 kennt der Fachmann eine Vielzahl denkbarer Ausführungen.

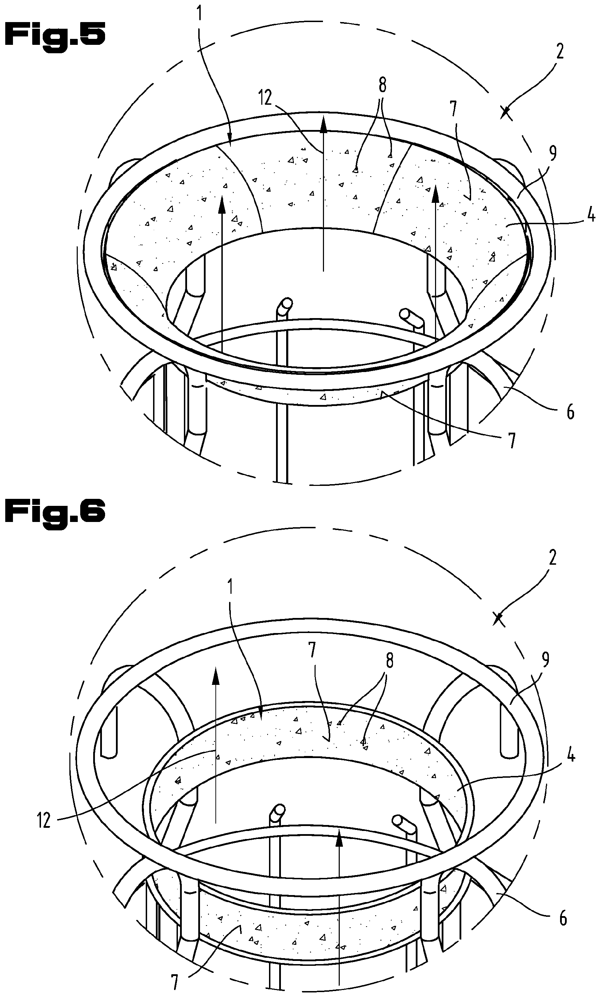

In den Fig. 1 und 3, sowie Fig. 4 ist das Filterelement 10 jeweils nicht vollständig, sondern lediglich abgerissen dargestellt, sodass auch der darin aufgenommene Stützkörper 6 erkennbar ist und damit die Funktion der Anzeigevorrichtung 1 im Anwendungsfall anschaulich dargestellt werden kann. In den Fig. 5 bis 7 ist das Filterelement 10 aus Gründen der Übersichtlichkeit der Darstellung nicht gezeigt. Es versteht sich von selbst, dass das Filterelement 10 tatsächlich den gesamten Stützkörper 6 umhüllt, also sackartig sowohl den Boden des Stützkörpers 6, als auch dessen Außenmantel vollständig umhüllt, sodass lediglich die Luftaustrittsöffnung 5 an der Oberseite des Stützkörpers 6 nicht vom Filterelement 10 bedeckt ist. In der Fig. 3 ist wiederum lediglich der Stützkörper 6 mit einer Anzeigevorrichtung 1 gezeigt. Das Filterelement 10 ist hier nicht dargestellt.

Im Betriebszustand der Filtervorrichtung 2 kann ein mit Partikeln 8 beladener bzw. verschmutzter Luftstrom 12 über die äußere Oberfläche bzw. die Außenseite des Filterelements 10, welche damit die Lufteintrittsöffnung bildet, in den Stützkörper 6 einströmen. Dabei können sich die Partikel 8 an der Außenseite des Filterelements 10 abscheiden und kann - zumindest im Falle eines leckagefreien bzw. unbeschädigten Filterelements 10 - nur der von Partikeln 8 zumindest weitgehend befreite Luftstrom 12 in das Innere des Filterelements 10, respektive in das Innere des Stützkörpers 6 eindringen. In weitere Folge kann der gereinigte Luftstrom 12 über eine Luftaustrittsöffnung 5 am oberen Ende des Filterelements 10 bzw. am oberen Ende des Stützkörpers 6 ausströmen.

Im Falle einer Leckage 11 oder einer sonstigen Beschädigung am Filterelement 10 kann kontaminierte Luft, also ein Luftstrom 12 umfassend Partikel 8, direkt in das Innere des Filterelements 10, respektive des Stützkörpers 6 eindringen. Die Leckage 11 ist in der Fig. 1 beispielhaft als Loch dargestellt. Dem Fachmann ist bekannt, dass Leckagen 11 eine Vielzahl möglicher Formen aufweisen können, beispielsweise in Form von Rissen, Gewebeschäden, Mikrorissen usw.

Die Filtervorrichtung 2 umfasst weiters eine Anzeigevorrichtung 1 mit einem Anzeigeelement 4. Das Anzeigeelement 4 ist dabei an der Luftaustrittsöffnung 5 des Stützkörpers 6 der Filtervorrichtung 2 anordenbar oder angeordnet. Zudem weist das Anzeigeelement 4 eine Oberfläche 7 auf, welche derart ausgebildet ist, dass sich Partikel 8, insbesondere Staub, auf dieser ablagern können, sodass sich die Oberfläche 7, insbesondere deren optischer Eindruck, infolge einer Ablagerung von Partikeln 8 verändert.

In den Fig. 1 und 3, sowie in den Fig. 4 bis 7 ist hier gut erkennbar, wie Partikel 8 über eine Leckage 11 direkt in das Innere des Filterelements 10, respektive des Stützkörpers 6 eindringen können. Im Innenraum können die Partikel 8 weiter nach oben in Richtung Luftaustrittsöffnung 5 strömen. Dort können die Partikel 8 die Anzeigevorrichtung 1, insbesondere die Oberfläche 7 des Anzeigeelements 4 umströmen und sich darauf ablagern. Dadurch kann sich die optische Erscheinung der Oberfläche 7 des Anzeigeelements 4 verändern, sodass ein Benutzer diese optische Änderung einfach erkennen kann.

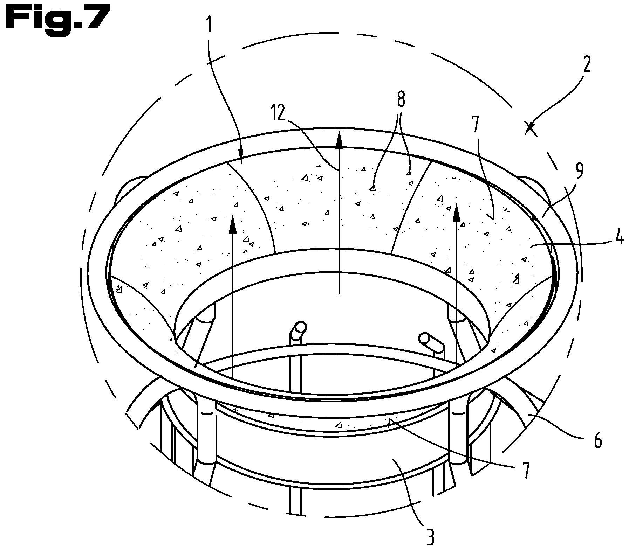

Vorteilhafterweise kann die Anzeigevorrichtung 1 weiters ein Verbindungselement 3 umfassen, wobei das Anzeigeelement 4 mit dem Verbindungselement 3 gekoppelt ist, und wobei das Anzeigeelement 4 mittels des Verbindungselements 3 an der Luftaustrittsöffnung 5 des Stützkörpers 6 der Filtervorrichtung 2 anordenbar oder angeordnet ist. In den Figuren 1 bis 4 ist das Verbindungselement 3 stabförmig ausgebildet und beabstandet das Anzeigeelement 4 vom oberen Ende bzw. von der Luftaustrittsöffnung 5, sodass das Anzeigeelement 4 die Luftaustrittsöffnung 5 in axialer Richtung der Stützkörpermittelsachse überragt, und ist damit für einen Betrachter bzw. Inspekteur besonders gut einsehbar. In der Fig. 7 ist das Verbindungselement 3 ringförmig, beispielsweise als Schnappring, ausgebildet und dient zur Befestigung eines hohlzylindrischen bzw. eines trichterförmigen Anzeigeelements 4.

Darüber hinaus kann es sein, dass das Anzeigeelement 4 mit dem Verbindungselement 3 lösbar gekoppelt ist, oder dass das Verbindungselement 3 mit der Luftaustrittsöffnung 5 des Stützkörpers 6 lösbar gekoppelt ist.

Zudem kann es sein, dass das Anzeigeelement 4 insbesondere mittels des Verbindungselements 3 an einem oberen Laufring 9 des Stützkörpers 6 angeordnet ist. In den Fig. 1 bis 4 ist das kugelförmige Anzeigeelement 4 mittels des stabförmigen Verbindungselements 3 an dem oberen Laufring 9 des Stützkörpers 6 angeordnet dargestellt. In der Fig. 7 ist das hohlzylindrische bzw. trichterförmige Anzeigeelement 4 mittels des Verbindungselements 3 im Nahbereich des oberen Laufring 9 des Stützkörpers 6 angeordnet dargestellt.

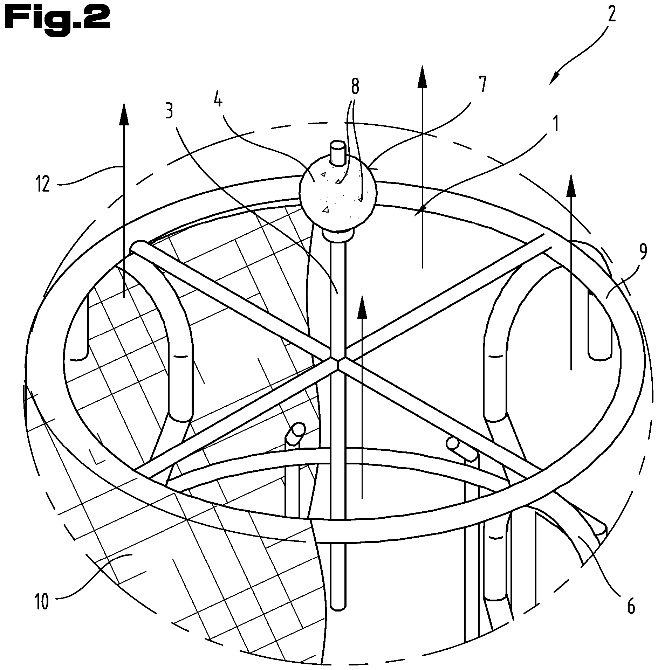

In den Fig. 1 bis 3 ist gezeigt, dass das Anzeigeelement 4 insbesondere mittels des Verbindungselements 3, mittig bzw. zentral, an dem oberen Laufring 9 des Stützkörpers 6 angeordnet sein kann. Hierzu kann der obere Laufring 9 beispielsweise wie besonders gut in der Fig. 2 erkennbar kreuzförmige Verstrebungen aufweisen, welche eine solche mittige bzw. zentrale Anordnung ermöglichen. Diese Befestigungsmöglichkeit ist jedoch nur beispielhaft zu verstehen und steht stellvertretend für eine Vielzahl denkbarer Befestigungsmöglichkeiten.

In der Fig. 4 ist ein weiteres Ausführungsbeispiel gezeigt, bei welchem mehrere, im dargestellten Beispiel drei, insbesondere kugelförmige, Anzeigeelemente 4 am Umfang des oberen Laufring 9 des Stützkörpers 6 angeordnet sein können. Dies beispielsweise wie gezeigt jeweils mittels stabförmiger Verbindungselemente 3, oder nicht figürlich gezeigt, auch ohne Verbindungselemente 3.

Ein weiteres Ausführungsbeispiel ist in der Fig. 5 gezeigt. Hierbei ist das Anzeigeelement 4 ringförmig, hohlzylindrisch bzw. trichterförmig ausgebildet. Die Form erinnert dabei an die Form einer Ventilator-Einlaufdüse. Das Anzeigeelement 4 kann dabei gemäß dem Beispiel in der Fig. 5 an dem oberen Laufring 9 des Stützkörpers 6 angeordnet sein. In der Abbildung überragt das Anzeigeelement 4 den oberen Laufring 9 bzw. die Luftaustrittsöffnung 5 in axialer Richtung der Stützkörpermittelachse nicht. Es ist jedoch ebenso denkbar, aber nicht figürlich gezeigt, dass zumindest ein Teil des trichterförmigen Anzeigeelements 4 gemäß dem Beispiel in der Fig. 5 den oberen Laufring 9 bzw. die Luftaustrittsöffnung 5 in axialer Richtung der Stützkörpermittelachse überragt. Ein solches Anzeigeelement 4 kann, unabhängig davon ob es den oberen Laufring 9 bzw. die Luftaustrittsöffnung 5 in axialer Richtung der Stützkörpermittelachse überragt oder nicht, vorteilhafterweise auch bei seitlicher Betrachtung für eine Inspektion gut einsehbar sein.

Eine Filtervorrichtung 2 bzw. ein Stützkörper 6 kann mit einem solchen Anzeigeelement 4 auch nachgerüstet werden. Dies beispielsweise, indem das Anzeigeelement 4 in den bzw. auf den oberen Laufring 9 ein- oder aufgesteckt, oder in oder auf diesen geklippt oder anderweitig befestigt wird.

Ein weiteres Ausführungsbeispiel ist in der Fig. 6 gezeigt. Hierbei ist das Anzeigeelement 4 ebenso ringförmig ausgebildet, wie im Beispiel gemäß Fig. 5, ist jedoch anstatt trichterförmig nun rohr- oder manschettenförmig ausgebildet. Die gezeigte Form gleicht dabei beispielsweise einem Schnappring, beispielsweise vergleichbar mit der Ausführung eines Schnappringes, welcher oftmals am Filterschlauch zur Befestigung in der Filterkopfplatte angeordnet ist.

Ein Anzeigeelement 4 im Sinne der Fig. 6 kann in den Stützkörper 6 eingesteckt werden. Weiters kann ein Anzeigeelement 4 im Sinne der Fig. 6 eine Oberfläche 7 aus einem textilen Material oder Gewebe umfassen, welches um den Stützkorbkopf bzw. um das obere Ende bzw. die Luftaustrittsöffnung 5 gestülpt werden kann.

Das Anzeigeelement 4 kann dabei gemäß Fig. 6 unterhalb des oberen Laufrings 9, also quasi im Inneren des Stützkörpers 6 angeordnet sein. In der Fig. 6 überragt das ringförmige Anzeigeelement 4 den oberen Laufring 9 bzw. die Luftaustrittsöffnung 5 in axialer Richtung der Stützkörpermittelachse nicht. Es ist jedoch denkbar, aber nicht figürlich gezeigt, dass zumindest ein Teil des Anzeigeelements 4, insbesondere eine Oberfläche 7 aus einem textilen Material oder Gewebe, gemäß Fig. 6 den oberen Laufring 9 bzw. die Luftaustrittsöffnung 5 in axialer Richtung der Stützkörpermittelachse überragt.

In der Fig. 7 ist ein weiteres Ausführungsbeispiel gezeigt, bei welchem die Ausführungsbeispiele gemäß den Fig. 5 und 6 kombiniert sind. Dabei ist ein ringförmiges Verbindungselement 3 in Form eines Hohlzylinders, insbesondere eines Schnappringes ausgebildet. Dieses Verbindungselement 3 dient im gezeigten Ausführungsbeispiel als Halterung für das hohlzylindrische und trichterförmige Anzeigeelement 4, welches bereits in Zusammenhang mit dem Ausführungsbeispiel in Fig. 5 beschrieben wurde.

Denkbar ist in Zusammenhang mit allen Ausführungsbeispielen, dass die Oberfläche 7 des Anzeigeelements 4 glatt ausgebildet ist, und/oder dass die Oberfläche 7 des Anzeigeelements 4 elektrostatisch geladen ist, und/oder dass die Oberfläche 7 des Anzeigeelements 4 mit einem Kleber ausgebildet ist und/oder dass die Oberfläche 7 des Anzeigeelements 4 mit einem Gewebe oder Gewirk ausgebildet ist.

Darüber hinaus kann es sein, dass die Oberfläche 7 des Anzeigeelements 4 kugelförmig wie in den Fig. 1 bis 4, halbkugelförmig, plattenförmig, hohlzylindrisch, hohl, bogenförmig, trichterförmig oder ringförmig, wie in den Fig. 5 bis 7, ausgebildet ist.

Zudem kann es sein, dass die Oberfläche 7 des Anzeigeelements 4 Glas oder Metall oder ein textiles Material umfasst.

Denkbar ist auch, dass die Oberfläche 7 des Anzeigeelements 4 reinigbar ist, insbesondere abwischbar, abwaschbar, oder waschbar ist, und/oder dass die Anzeigevorrichtung 1, das Anzeigeelement 4 oder die Oberfläche 7 des Anzeigeelements 4 entfernbar und austauschbar sind.

Vorteilhafterweise kann es auch sein, dass das Anzeigeelement 4 mit einem Datenträger, einem Sensor, und/oder mit einem maschinenlesbaren Element, insbesondere mit einem Chip, beispielsweise einem RFID-Chip, und/oder mit einer Antenne, ausgebildet ist.

Die in den Figuren gezeigte Filtervorrichtung 2 kann überdies in einem nicht näher gezeigten Filtersystem umfassend eine Vielzahl an Filtervorrichtungen 2 angeordnet sein, wobei hierbei zumindest eine der Filtervorrichtungen 2 innerhalb des Filtersystems erfindungsgemäß ausgebildet ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Anzeigevorrichtung
- 2: Filtervorrichtung
- 3: Verbindungselement
- 4: Anzeigeelement
- 5: Luftaustrittsöffnung
- 6: Stützkörper
- 7: Oberfläche
- 8: Partikel
- 9: oberer Laufring
- 10: Filterelement
- 11: Leckage
- 12: Luftstrom

## Patentansprüche

1. Anzeigevorrichtung (1) zur Anzeige von Leckagen (11) in einer Filtervorrichtung (2), **dadurch gekennzeichnet,**
**dass** sie ein Anzeigeelement (4) umfasst,
wobei das Anzeigeelement (4) an einer Luftaustrittsöffnung (5) eines Stützkörpers (6) der Filtervorrichtung (2) anordenbar oder angeordnet ist, und
wobei das Anzeigeelement (4) eine Oberfläche (7) aufweist, welche derart ausgebildet ist, dass sich Partikel (8), insbesondere Staub, auf dieser ablagern können, sodass sich die Oberfläche (7), insbesondere deren optischer Eindruck, infolge einer Ablagerung von Partikeln (8) verändert.

2. Anzeigevorrichtung (1) nach Anspruch 1, **dadurch gekennzeichnet, dass** die Anzeigevorrichtung (1) ein Verbindungselement (3) umfasst, wobei das Anzeigeelement (4) mit dem Verbindungselement (3) gekoppelt ist, und wobei das Anzeigeelement (4) mittels des Verbindungselements (3) an der Luftaustrittsöffnung (5) des Stützkörpers (6) der Filtervorrichtung (2) anordenbar oder angeordnet ist.

3. Anzeigevorrichtung (1) nach Anspruch 2, **dadurch gekennzeichnet, dass** das Anzeigeelement (4) mit dem Verbindungselement (3) lösbar gekoppelt ist, oder dass das Verbindungselement (3) mit der Luftaustrittsöffnung (5) des Stützkörpers (6) lösbar gekoppelt ist.

4. Anzeigevorrichtung (1) nach einem der vorhergehenden Ansprüche, **dadurch gekennzeichnet, dass** das Anzeigeelement (4) an einem oberen Laufring (9) des Stützkörpers (6) angeordnet ist.

5. Anzeigevorrichtung (1) nach einem der vorhergehenden Ansprüche, **dadurch gekennzeichnet, dass** die Oberfläche (7) des Anzeigeelements (4) glatt und/oder lichtreflektierend ausgebildet ist, und/oder dass die Oberfläche (7) des Anzeigeelements (4) elektrostatisch geladen ist, und/oder dass die Oberfläche (7) des Anzeigeelements (4) mit einem Kleber ausgebildet ist und/oder dass die Oberfläche (7) des Anzeigeelements (4) mit einem Gewebe oder Gewirk ausgebildet ist.

6. Anzeigevorrichtung (1) nach einem der vorhergehenden Ansprüche, **dadurch gekennzeichnet, dass** die Oberfläche (7) des Anzeigeelements (4) kugelförmig, halbkugelförmig, plattenförmig, hohlzylindrisch, hohl, bogenförmig, trichterförmig oder ringförmig ausgebildet ist.

7. Anzeigevorrichtung (1) nach einem der vorhergehenden Ansprüche, **dadurch gekennzeichnet, dass** die Oberfläche (7) des Anzeigeelements (4) reinigbar ist, insbesondere abwischbar, abwaschbar, oder waschbar ist, und/oder dass die Anzeigevorrichtung (1), das Anzeigeelement (4) oder die Oberfläche (7) des Anzeigeelements (4) entfernbar und austauschbar sind.

8. Anzeigevorrichtung (1) nach einem der vorhergehenden Ansprüche, **dadurch gekennzeichnet, dass** das Anzeigeelement (4) mit einem Datenträger, einem Sensor, und/oder mit einem maschinenlesbaren Element, insbesondere mit einem Chip, beispielsweise einem RFID-Chip, und/oder mit einer Antenne, ausgebildet ist.

9. Filtervorrichtung (2) zur Reinigung eines mit Partikeln (8) beladenen Luftstroms (12), umfassend ein insbesondere sackartiges, formflexibles und luftdurchlässiges Filterelement (10) und einen Stützkörper (6),
**dadurch gekennzeichnet, dass** die Filtervorrichtung (2) weiters eine Anzeigevorrichtung (1) nach einem der Ansprüche 1 bis 8 umfasst.

10. Filtersystem umfassend eine Vielzahl an Filtervorrichtungen (2), **dadurch gekennzeichnet, dass** zumindest eine der Filtervorrichtungen (2) nach Anspruch 9 ausgebildet ist.
